# EUROPEAN PATENT SPECIFICATION

(11) **EP 3 412 183 B1**
(45) Date of publication and mention of the grant of the patent: **27.05.2020**
(21) Application number: 17175108.4
(22) Date of filing: 08.06.2017
(51) Int. Cl.: A47J 31/46, A47J 31/52, A47J 31/56

(54) **AUTOMATIC COFFEE MAKER**
AUTOMATISCHE KAFFEEMASCHINE
MACHINE À CAFÉ AUTOMATIQUE

(43) Date of publication of application: 12.12.2018
(73) Proprietor: BSH Hausgeräte GmbH, 81739 München (DE)
(72) Inventor: Mesko, Ales, 3240 Smarje pri Jelsah (SI); Lemez, Samo, 3327 Smartno ob Paki (SI); Winkler, Gerhard, 83334 Inzell (DE); Wallner, Katharina, 84561 Mehring (DE)

(56) References cited:
- GB-A- 1 482 008
- US-A- 4 094 233
- US-A- 4 575 615
- US-A- 5 937 455

## Description

The present invention relates to an automatic beverage maker, more particularly, to automatic coffee maker provided with water delivery system having anti-overflow, anti-spillover and anti-flooding means, preventing it and environment from flooding.

An anti-overflow type dispenser is known from the CN104106981(A). Wherein the water cannot flow from the bucket when the water in the storage tank reaches the limit water level, including the case, the rocker and the float connected to one end of the rocker, A water supply faucet and a water storage tank are provided with a water inlet rod, a water outlet and a water inlet are connected with each other through a water pipe, the float is located in a water storage tank, an overflow control valve, is provided in the water pipe, The control valve is normally open valve, the overflow control valve bag is provided with a pressing handle, the other end of the rocker is provided with a pressing part, the storage tank has a storage limit; when the water in the storage tank reaches the storage limit, Is pressed against the pressing handle so that the overflow control valve is closed. However, said solution doesn't prevent from overflowing, when control valve or rocker or float are not working properly and also requires a space for properly arrangement thereof.

It is also known from US4749107(A) a beverage reservoir from which beverage is dispensed in a coin-operated beverage making machine. The reservoir has a handle which incorporates an overflow passageway preventing beverage from otherwise overflowing the reservoir. The overflow passageway discharges into a drain tube which in turn discharges in the area in which beverage is normally dispensed into consumers' cups. However, said invention doesn't prevent from overflowing in automatic manner.

From CN205083283(U) is known a water dispenser, water tank, overflow structure, the water dispenser comprises a water tank and an electronic control element. The overflow bypass structure comprises an overflow pipe, and an overflow hole is arranged on the water tank, The first end of the flow tube is connected to the overflow hole and the second end of the overflow pipe is disposed at a position remote from the electronic control element. The water dispenser of the water dispenser provided in the utility model can prevent the overflow water from flowing to or splashing on the other electronic control element by providing the overflow hole on the water tank and connecting the overflow pipe so that the water tank control element fails, causing a short circuit or electric shock. However, said invention doesn't prevent from overflowing in automatic manner, it doesn't automatically stop water flow.

From US4094233(A) is known automatic coffee maker with a protection unit for protecting against uncontrolled increase of water level in the tank. In a normal condition the said protection unit is placed in the tank above the water level.

It is also known from US4575615(A) a hot water supplying device provided with a hot water supplying tank which includes first and second tank chambers. Warm water of about 85 DEG C. is stored in the first tank chamber and hot water, which is higher in temperature than the warm water in the first tank chamber, is stored in the second tank chamber. The warm water in the first tank chamber is supplied to a coffee liquid making or percolating means by a pressure pump through a guide pipe. The guide pipe is introduced, on the way, into the hot water in the second tank chamber, whereby the warm water pressure fed from the first tank chamber through the guide pipe can be further heated by the heat of the hot water in the second tank chamber, and supplied to the coffee liquid making or percolating means.

From GB1482008(A) is known a coffee brewing apparatus using liquid level float controller switch. The float switch is located in a compartment of a basin that is arranged normally not to receive any of the cold water that is applied otherwise to the basin. The compartment is defined partly by walls of the basin including outer wall and an intermediate side wall the upper edge of which is located well above the level of the cold water that normally flows into the basin. If the water level rises above the height of the intermediate wall, the compartment is filled up and the float switch is actuated.

It is also known from US5937455(A) is known an electrically operated solenoid valve for use on a flush toilet tank, and capable of variable adjustment. This system comprises a float switch mounted on a calibrated bracket secured to a tank, such that the float for the float switch is mounted within the tank and the height of the float above the tank floor can be adjusted utilizing the bracket. The bracket is preferably calibrated, so as to permit variable adjustment to the height of the float within the tank. The float switch is upwardly connected to an electrically operated solenoid valve to permit water to flow into the tank when the float is below a minimum water level, and to close the valve when the float returns to the minimum water level.

The objective of the present invention is to provide an automatic coffee maker, and more particular the automatic coffee maker having a water delivering system, comprising anti-overflow, anti-spillover and anti-flooding means, wherein a space-saving arrangements, and automatic protection against overflowing and the environment flooding is provided.

This object is achieved by the technical features described in the characterizing part of the claim 1. Additional technical features and preferred embodiments of the invention are given in the dependent claims.

The foregoing general description and detailed description, given hereafter, are merely exemplary and are understood as additional explanations of the claimed invention. Other advantages and features of the invention result from the following descriptions, drawings and claims.

In accordance with the present invention, there is provided an automatic coffee maker, comprising a water delivery system having a water inlet communicated with an electrically actuated valve, an actuator thereof supplied by an electrical circuit, which is provided with at least one an electric overflow sensor with a first electrical contact, disconnecting the actuator from the power supply for shifting the valve from open to close position when the water delivered to a basin by an overflow duct, achieved defined level. The valve is a normally close valve, therefore if the electrical circuit is not powered, the valve is closed, and the water cannot get into the water inlet. After supplying the electrical circuit, the actuator shifts the valve to open position, then the water can flow by the valve, until at least one of the electrical contacts, placed in the electrical circuit, disconnects the actuator from power. If the electrical circuit comprising more than one electrical contact, they are connected in series. The electrical contact is a part of an sensor for closing or opening the electrical circuit with respect to the supervised value. The electric overflow sensor is provided with at least one normally closed an electrical contact placed in the electrical circuit.

Advantageously, the water delivery system provided with anti-overflow, anti-spillover, anti-flooding means, has a space-saving possibility of arrangements, so as to build compact size device, as automatic coffee maker or other devices for making beverages. Further, the water delivery system is independent of the software control device failure, and can automatically stop the water flow to device. The electrical circuit further comprises a tank sensor provided with a second electrical contact for controlling the valve. The tank sensor is an electrical switch, which can be operated by contact the water tank, so the second electrical contact is closed and water can flow to the water inlet, only when the water tank is in the contact with said electrical switch. This is for preventing automatic coffee maker from working without the water tank or not correctly mounted the water tank in a housing opening. Therefore, because the water tank is one of the element of the water delivery system, participating in the water transport, its missing or improper mounting, could lead to the risk of flooding. Therefore, the tank sensor prevents from said situation. It's enough if the electric overflow sensor detects the appropriate supervised value for disconnecting the actuator from the power and closing the valve, thereby prevents from overflowing, not only the device, but also protecting the environment from flooding.

This is extremely important because automatic coffee maker can be supplied by water from waterworks, what in the case of device failure would lead to serious flooding of the environment.

A system for making coffee is a part of the automatic coffee maker where the beverage such as a coffee is brewed, and usually comprising, a coffee outlet, a portion for receiving water and a substance to be brewed (for instance coffee) with a system for delivering coffee and removing grounds; further comprising a heater and pump to produce water pressure and valves. In popular coffee machines coffee in brewed by passing hot pressured water through the appropriate doze of coffee. The system for delivering water provides the water, preferably from the water tank to the pump inlet as a part of the system for making coffee. The valve is the solenoid valve.

According ot the invention, an automatic coffee maker is provided with the water delivery system comprising a housing disposed with the overflow duct having, an overflow tube with an overflow opening, and at the upper portion thereof a water supply adapter, further comprising on the side thereof an housing opening for communicating the water tank having a spout for transporting excess water, with the basin, for easier and safe-cost producing and assembling parts thereof.

In a preferred embodiment a maximum water level in the water tank is defined by the bottom edge of a spout. After exceeding this level, water is transported to the basin. When the water level in the basin achieves defined level, then the overflow sensor, namely the first electrical contact disconnects the actuator of the valve from the power and the water stops flowing. The spout of the water tank passes through the housing to the overflow tube by the housing opening and the overflow opening. During normal work, when automatic coffee maker is fully functional, water level is kept at a defined normal water level, i.e. below the maximum water level in the water tank, by using other electronic or mechanical means. During abnormal work of automatic coffee maker e.g. due to a coffee maker software failure, a water level can exceed the defined normal water level, then if it exceeds the maximum water level in the water tank, then the water is transported to the basin, what causes the overflow sensor activation and finally stops the water flow, if the defined water level in the basin is achieved. Said excess water remains in the basin, therefore the danger of flooding is resolved.

Preferably, the overflow sensor comprises the first electrical contact placed in the electrical circuit for feeding the actuator, and a float located in the basin for reliable measuring the water level in the basin. The float cooperates with the first electric contact. Along with the increase water level in the basin the float is lifted. When water achieves defined level, the float opening the first electric contact, therefore the actuator of the valve is being disconnected from electrical power and finally the valve stops water flowing to the water inlet.

Preferable the water delivery system is disposed with the water supply adapter having the inlet in the form of a tube, form one side connected to the valve, second end of the tube enters an upper opening of the housing for transporting water from the water supply to the water tank, further the water supply adapter is equipped with a bottom portion, surrounded by protruded a wall, further comprising a gap in the bottom communicated with the overflow tube. Said protruded wall protects against flooding as a result of leakage of the connection a water hose to the water inlet. Gathered water flows to the overflow tube, then to the basin.

In another embodiment the electrical circuit further comprising an electrical contact controlled by electronic means of automatic coffee maker for keeping water level in the water tank below bottom edge of the spout so below overflow level. In that arrangements the valve is also use for controlling water level during normal work of the device, not only as protecting against flooding system or safety system, therefore additional a valve is not needed.

Preferably the basin with the float is placed on the opposite side of a baffle, and having a common base with the housing.

In another preferred embodiment the basin is formed by a bottom portion, further comprising three circumferential walls and the portion of the baffle for space saving and compact arrangements.

Preferable, the overflow tube is in the shape of an inverted "L" letter having a support for supporting the tank sensor. Inverted L-shaped tube gives in the upper portion a place, namely a support for mounting the tank sensor, nearby the spout of the water tank. Therefore, pressing the tank sensor by the spout of the water tank after correct mounting is easy to arrange.

The present invention solves the problem of providing automatic coffee maker disposed with the water delivering system, having anti-overflowing, anti-spillover and anti-flooding means, protecting the device, namely automatic coffee maker, and the environment from flooding. The water flow from waterworks to the water inlet of automatic coffee maker is automatically stopped when the defined water level in the basin is achieved. The water level in the basin can increase when the water exceeds the maximum water level in the water tank or because of leaking the connection of the water hose to the water inlet. The water delivery system is also protecting from possibility to flow water to the inlet if the water tank is missing or badly put inserted to the housing.

The construction of the invention, however, together with additional objects and corresponding advantages will be best understood from the following description of specific embodiments and in connection with the accompanying drawings.

Further benefits and advantages of the present invention will become apparent after a careful reading of the detailed description with appropriate reference to the accompanying drawings.

In the drawings:
Fig. 1 shows perspective view of disassembled parts of the water delivery system.
Fig. 2 shows perspective view of assembled together parts of the water delivery system.
Fig. 3 shows vertical section of the water delivery system with the water tank correctly mounted.
Fig. 4 shows a horizontal section of the water delivery system in two variants: with correctly and badly the water tank mounted.

Automatic coffee maker has a system for making coffee and a water delivery system for delivering water to the system for making coffee. Cold water from the water delivery system, namely from the water tank is delivered by the pump to the heater which heats the water to the desirable brewing temperature. Then the hot water is forcing by the pressure to go through ground coffee beans and flows through a coffee outlet to the cup. The water level in the water tank should be kept on the constant level below the maximum level. Exceed of the maximum level of the water in the water tank, automatically stops the water flow by a preventing means as the valve with the electric actuator supplied by the electrical circuit powered directly from the power grid, wherein the electrical circuit could be broken by the electrical contact.

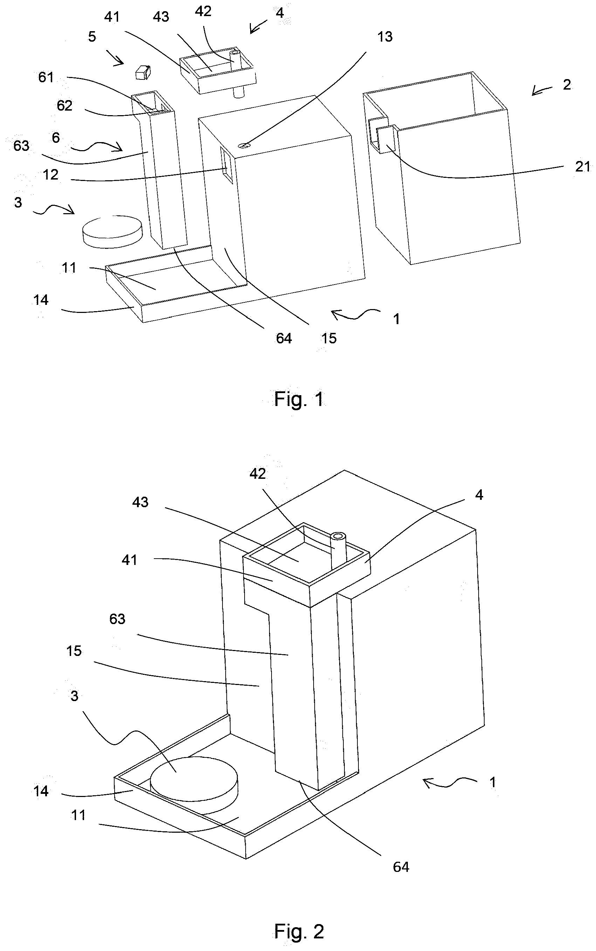

Fig. 1 shows perspective view of the portion of the automatic coffee maker, namely disassembled the water delivery system, comprising a housing 1, having a recess for receiving a water tank 2. The water tank 2 is provided with a spout 21, which bottom edge part defines the maximum water level in the water tank 2. Further, the housing 1 comprising a bottom part which protruding beyond a baffle 15, surrounded by three circumferential walls 14, which are perpendicular with respect to the bottom, and together with a part of said baffle 15, create a basin 11 for collecting excess water. A float 3 is placed in the basin 11, and is mechanically connected to a first electrical contact 73 (not shown on this figure), both creates an overflow sensor 74. Increasing of the water level in the basin 11, results that the float 3 is simultaneously lifted up. When water level achieved defined level, then the float 3 presses on the first electrical contact 73 and disconnects it. Excess water is transported to the basin 11 by an overflow duct 6 having an overflow tube 63, in the shape of inverted "L" letter, mounted on the baffle 15, communicated with the water tank 2 by an overflow opening 62, and is covered by a water supply adapter 4. The upper portion of the overflow tube 63 has the overflow opening 62, at the upper portion thereof and a support 61 for receiving a tank sensor 5 as an electric switch. Said electric switch is a normally opened electric switch and it a second electrical contact 5' is connected in series in an electrical circuit 7 (not shown on this figure). When the water tank 2 is correctly fixed in the housing 1, the spout 21 presses the tank sensor 5, therefore the second electrical contact 5' is closed. In the contrast the second electrical contact 5' is opened when the water tank 2 is missing or badly fixed in the housing 1. The overflow tube 63 from upper side is closed by the water supply adapter 4. The water supply adapter 4 has a bottom 43, a water inlet 42, it the first end, for transporting water from waterworks by a valve 71 and the water hose (not shown on this figure) to the water tank 2. The water inlet 42 is in the form of tube, perpendicularly and symmetrically to the bottom 43, and it the second end passes the housing 1 at an upper opening 13. The bottom 43 is surrounded by perpendicular walls 41, and further comprising a gap 44 arranged at the bottom 43 for communicating with the overflow tube 63. If the connection between the water hose (not shown in this figure) and the first end of water inlet 42 leaking, water is collected in the water supply adapter 4, and transported to the basin 11 by the overflow tube 63.

Fig. 2 shows assembled the water delivery system, part of automatic coffee maker. The housing 1 has the overflow tube 63, mounted on its the baffle 15, closed from the upper side by the water supply adapter 4 having the gap 44 (not shown on this figure) for transporting water to the overflow tube 63. The bottom of the housing 1, protrudes beyond the baffle 15 and with the circumferential wall 14 and part of the baffle 15 create the basin 11. The float 3 is placed in the basin 11 and cooperates with the first electrical contact 73 (not shown on this figure). An outlet 64 of the overflow tube 63 is arranged above a bottom of the basin 11 to allow free flow of water to the basin 11. The float 3 is mechanically connected to the first electrical contact 73 is normally closed. When the water in the basin 11 achieves defined level, below the height of the circumferential wall 14, the float 3 presses the first electrical contact 73 and opening it, therefore the electric current flow in the electrical circuit 7 (not shown on this figure) is stopped and the valve 7 is shifted to the close position, so the water cannot flow by it.

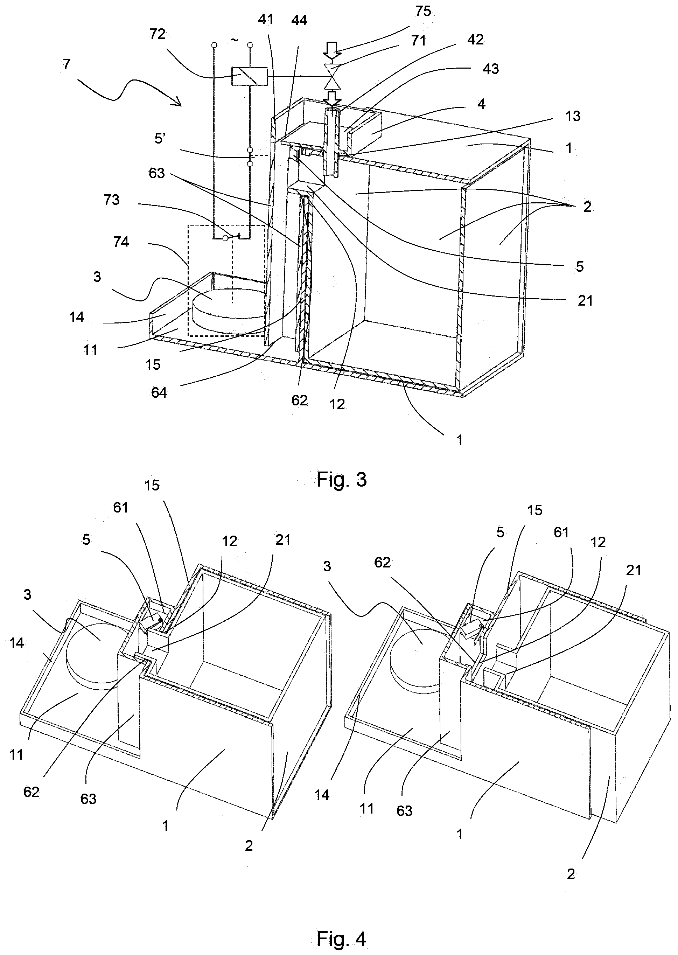

Fig. 3 shows assembled the water delivery system with the water tank 2 correctly mounted in the recess of the housing 1. When the electrical circuit 7 is powered the first electrical contact 73, part of the overflow sensor 74, and the second electrical contact 5', part of the tank sensor 5 are closed, the actuator 72 shifting the valve 71 from closed to the opened position, therefore water from the water supply 75, can flow through the valve 71, the water inlet 42, which is formed in a shape of symmetrical tube perpendicular with respect to the bottom 43, to the water tank 2. The water supply adapter 4 also comprising the bottom 43, the gap 44 arranged between the bottom 43 and circumferential walls 41. Such shape is convenient for collecting leaking water from the connection between the water hose (not shown on this figure) and the first end of the water inlet 42. The second end of the water inlet 42 goes through the upper opening 13 to the water tank 2, which is correctly placed in the recess of the housing 1. The water tank 2 comprises the spout 21, which after correctly assembling goes through the housing opening 12 and the overflow opening 62. The spout 21 presses the tank sensor 5, therefore the second electrical contact 5' is closed, therefore the electric current can flow through it. The basin 11 is made by extended beyond the baffle 15 the bottom of the housing 1, and circumferential wall. The sensor 5 is placed on the support 61, to be actuated by the spout 21. The overflow tube 63, part of the overflow duct 6 is fixed on the baffle 15. The housing opening 12 and the overflow opening 62 having the same size, and are matched. Above the bottom of the basin 11 is placed the outlet of the overflow tube 63.

Fig. 4 shows the water delivery system with the principle of operation of the tank sensor 5. Said tank sensor 5 is placed on the support 61, arranged inside overflow tube 63 near to the overflow opening 62 and the housing opening 12. The tank sensor 5 is actuated by the spout 21 of the water tank 2. When the water tank 2 is correctly mounted in the recess of the housing 1, the spout 21 presses the tank sensor 5 what causes that the first electrical contact 5' is closed and the electrical current flow in the electrical circuit 7 is available. In the contrast when the water tank 2 is not correctly mounted in the recess of the housing 1 or missed, the tank sensor 5 is released, therefore the second electrical contact 5' is opened and the electric current cannot flow through it, then the water flow is stopped by the valve 71.

Although the invention, shown in the above exemplary embodiment, was described with reference to its preferred embodiment, it is understood that there are many other possible modifications and variations which may be designed without going beyond the scope of protection of the present invention.

### LIST OF REFERENCE SIGNS

- 1: housing
- 2: water tank
- 3: float
- 4: water supply adapter
- 5: tank sensor
- 5': second electrical contact
- 6: overflow duct
- 7: electrical circuit
- 11: basin
- 12: housing opening
- 13: upper opening
- 14: circumferential wall
- 15: baffle
- 21: spout
- 41: wall
- 42: water inlet
- 43: bottom
- 44: gap
- 61: support
- 62: overflow opening
- 63: overflow tube
- 64: outlet
- 71: valve
- 72: actuator
- 73: first electrical contact
- 74: overflow sensor
- 75: water supply

## Claims

1. Automatic coffee maker comprising a system for making coffee and a water delivery system for delivering water to the system for making coffee comprising a housing (1) disposed with a tank (2), a basin (11), an overflow duct (6) having, an overflow tube (63) with an overflow opening (62), and at the upper portion thereof, a water supply adapter (4), further comprising on the side thereof an housing opening (12) for communicating the water tank (2) having a spout (21), with the basin (11) for transporting excess water from the tank (2) to the basin (11), wherein the water delivery system additionally has a water inlet (42) communicated with a valve (71) electrically actuated by an actuator (72) which is supplied by an electrical circuit (7) provided with at least one electric overflow sensor (74), with a first electrical contact (73), disconnecting the actuator (72) from the power supply for shifting the valve (71) from open to close position, when the water delivered to a basin (11) by an overflow duct (6) achieved defined level, the electrical circuit (7) further comprises a tank sensor (5) provided with a second electrical contact (5') for controlling the actuator (72), **characterized in that** the tank sensor (5) is an electrical switch, which can be operated by contact with the water tank (2) so the second electrical contact (5') is closed only when the tank (2) is in the contact with said electrical switch.

2. Automatic coffee maker according to claim 1 or 2, **characterized in that** the maximum level of the water in the tank (2) is defined by the bottom edge of a spout (21).

3. Automatic coffee maker according to any of the proceeding claims from 1 to 3, **characterized in that** the spout (21) enters the housing opening (12) and the overflow opening (62).

4. Automatic coffee maker according to any of the proceeding claims from 1 to 4, **characterized in that** the electric overflow sensor (74) comprises the first electrical contact (73) placed in the electrical circuit (7) for feeding the actuator (72), and a float (3) located in the basin (11).

5. Automatic coffee maker according to any of the preceding claims, **characterized in that** the water supply adapter (4) having the inlet (42) in the form of a tube, enters an upper opening (13) for transporting water from the water supply (75) to the tank (2).

6. Automatic coffee maker according to any of the preceding claims, **characterized in that** the water supply adapter (4) is equipped with a bottom (43) surrounded by a protruded wall (41), further comprising a gap (44) in the bottom (43) communicated with the overflow tube (63).

7. Automatic coffee maker according to any of the preceding claims, **characterized in that** the housing (1) having a space for receiving the tank (2).

8. Automatic coffee maker according to any of the preceding claims, **characterized in that** the electrical circuit (7) further comprising an electrical contact controlled by electronic means of the automatic coffee maker for keeping water level in the water tank (2) below bottom edge of the spout (21) so below overflow level.

9. Automatic coffee maker according to any of the preceding claims, **characterized in that** on the opposite side of a baffle (15) is placed the basin (11) with the float (3).

10. Automatic coffee maker according to any of the preceding claims **characterized in that** the basin (11) and the housing (1) having common a bottom.

11. Automatic coffee maker according to any of the preceding claims **characterized in that** the basin (11) is formed by a bottom portion, further by three circumferential walls (14) and a portion of the baffle (15).

12. Automatic coffee maker according to any of the preceding claims **characterized in that** the overflow tube (63) is in the shape of an inverted "L" letter having an support (61) for supporting the tank sensor (5).

## Patentansprüche

1. Kaffeeautomat mit einem System zum Kaffeebrühen und einem Wasserabgabesystem zum Abgeben von Wasser an das System zum Kaffeebrühen mit einem Gehäuse (1), an dem ein Behälter (2), eine Schale (11), ein Überlaufkanal (6) angeordnet ist, der ein Überlaufrohr (63) mit einer Überlauföffnung (62) und am oberen Abschnitt einen Wasserzufuhradapter (4) aufweist, ferner mit einer Gehäuseöffnung (12) an seiner Seite zum Verbinden des Wasserbehälters (2), der eine Tülle (21) aufweist, mit der Schale (11) zum Leiten von überschüssigem Wasser aus dem Behälter (2) zur Schale (11), wobei das Wasserabgabesystem außerdem einen Wassereinlass (42) aufweist, der mit einem Ventil (71) verbunden ist, das über ein Stellelement (72) elektrisch betätigt wird, welches von einer elektrischen Schaltung (7) versorgt wird, die mit mindestens einem elektrischen Überlaufsensor (74) mit einem ersten elektrischen Kontakt (73) versehen ist, der zum Umschalten des Ventils (71) aus der offenen in die geschlossene Position das Stellelement (72) von der Stromversorgung trennt, wenn das von einem Überlaufrohr (6) an eine Schale (11) abgegebene Wasser einen bestimmten Pegel erreicht, wobei die elektrische Schaltung (7) ferner einen Behältersensor (5) umfasst, der mit einem zweiten elektrischen Kontakt (5') zum Steuern des Stellelements (72) versehen ist,
**dadurch gekennzeichnet, dass**
es sich bei dem Behältersensor (5) um einen elektrischen Schalter handelt, der durch Kontakt mit dem Wasserbehälter (2) betätigt werden kann, so dass der zweite elektrische Kontakt (5') nur dann geschlossen ist, wenn sich der Behälter (2) mit dem elektrischen Schalter in Kontakt befindet.

2. Kaffeeautomat nach Anspruch 1 oder 2, **dadurch gekennzeichnet, dass** der maximale Wasserpegel im Behälter (2) durch die untere Kante einer Tülle (21) festgelegt ist.

3. Kaffeeautomat nach einem der vorhergehenden Ansprüche 1 bis 3, **dadurch gekennzeichnet, dass** die Tülle (21) in die Gehäuseöffnung (12) und die Überlauföffnung (62) hinein verläuft.

4. Kaffeeautomat nach einem der vorhergehenden Ansprüche 1 bis 4, **dadurch gekennzeichnet, dass** der elektrische Überlaufsensor (74) den ersten elektrischen Kontakt (73), der zum Speisen des Stellelements (72) in der elektrischen Schaltung (7) angeordnet ist, und einen Schwimmer (3) in der Schale (11) umfasst.

5. Kaffeeautomat nach einem der vorhergehenden Ansprüche, **dadurch gekennzeichnet, dass** der Wasserzufuhradapter (4) mit dem Einlass (42) in Form eines Rohrs zum Leiten von Wasser aus der Wasserzufuhr (75) in den Behälter (2) in eine obere Öffnung (13) hinein verläuft.

6. Kaffeeautomat nach einem der vorhergehenden Ansprüche, **dadurch gekennzeichnet, dass** der Wasserzufuhradapter (4) mit einem Boden (43) ausgestattet ist, der von einer vorstehenden Wand (41) umgeben ist, und ferner einen Spalt (44) in dem Boden (43) umfasst, der mit dem Überlaufrohr (63) verbunden ist.

7. Kaffeeautomat nach einem der vorhergehenden Ansprüche, **dadurch gekennzeichnet, dass** das Gehäuse (1) Raum zum Aufnehmen des Behälters (2) aufweist.

8. Kaffeeautomat nach einem der vorhergehenden Ansprüche, **dadurch gekennzeichnet, dass** die elektrische Schaltung (7) ferner einen elektrischen Kontakt umfasst, der über elektronische Mittel des Kaffeeautomaten zum Beibehalten eines Wasserpegels in dem Wasserbehälter (2) unterhalb der unteren Kante der Tülle (21), also unterhalb des Überlaufpegels, gesteuert wird.

9. Kaffeeautomat nach einem der vorhergehenden Ansprüche, **dadurch gekennzeichnet, dass** die Schale (11) mit dem Schwimmer (3) auf der einer Trennwand (15) gegenüberliegenden Seite angeordnet ist.

10. Kaffeeautomat nach einem der vorhergehenden Ansprüche, **dadurch gekennzeichnet, dass** die Schale (11) und das Gehäuse (1) einen gemeinsamen Boden aufweisen.

11. Kaffeeautomat nach einem der vorhergehenden Ansprüche, **dadurch gekennzeichnet, dass** die Schale (11) von einem Bodenabschnitt, ferner von drei Umfangswänden (14) und einem Abschnitt der Trennwand (15) gebildet wird.

12. Kaffeeautomat nach einem der vorhergehenden Ansprüche, **dadurch gekennzeichnet, dass** das Überlaufrohr (63) die Form eines umgekehrten "L" mit einer Halterung (61) zum Halten des Behältersensors (5) aufweist.

## Revendications

1. Machine à café automatique comprenant un système permettant de faire du café et un système de distribution d'eau permettant de distribuer de l'eau au système afin de faire du café comprenant un logement (1) disposé avec un réservoir (2), une cuve (11), un conduit de trop-plein (6) présentant, un tube de trop-plein (63) avec une ouverture de trop-plein (62), et dans une partie supérieure de celui-ci, un adaptateur d'alimentation en eau (4), comprenant en outre sur son côté une ouverture de logement (12) permettant de communiquer avec le réservoir d'eau (2) présentant un embout (21), avec la cuve (11) permettant de transporter l'eau en surplus du réservoir (2) à la cuve (11), dans laquelle le système de distribution d'eau présente en outre une entrée d'eau (42) communiquant avec une vanne (71) électriquement actionnée par un actionneur (72) qui est alimenté par un circuit électrique (7) doté d'au moins un capteur de trop-plein électrique (74), avec un premier contact électrique (73), débranchant l'actionneur (72) de l'alimentation électrique afin de déplacer la vanne (71) de la position ouverte à fermée, lorsque l'eau fournie à la cuve (11) par un conduit de trop-plein (6) a atteint un niveau défini, le circuit électrique (7) comprend un capteur de réservoir (5) doté d'un second contact électrique (5') permettant de commander l'actionneur (72),
**caractérisée en ce que**
le capteur de réservoir (5) est un contacteur électrique, qui peut être actionné par contact avec le réservoir d'eau (2) de sorte que le second contact électrique (5') soit fermé uniquement lorsque le réservoir (2) est en contact avec ledit commutateur électrique.

2. Machine à café automatique selon la revendication 1 ou 2, **caractérisé en ce que** le niveau maximum de l'eau dans le réservoir (2) est défini par le bord inférieur d'un embout (21).

3. Machine à café automatique selon l'une quelconque des revendications 1 à 3 précédentes, **caractérisée en ce que** l'embout (21) entre dans l'ouverture de logement (12) et l'ouverture de trop-plein (62).

4. Machine à café automatique selon l'une quelconque des revendications 1 à 4 précédentes, **caractérisée en ce que** le capteur de trop-plein électrique (74) comprend le premier contact électrique (73) placé dans le circuit électrique (7) afin d'alimenter l'actionneur (72), et un flotteur (3) situé dans la cuve (11).

5. Machine à café automatique selon l'une quelconque des revendications précédentes, **caractérisée en ce que** l'adaptateur d'alimentation en eau (4) présentant l'entrée (42) sous la forme d'un tube, entre dans une ouverture supérieure (13) permettant de transporter de l'eau depuis l'alimentation en eau (75) vers le réservoir (2).

6. Machine à café automatique selon l'une quelconque des revendications précédentes, **caractérisée en ce que** l'adaptateur d'alimentation en eau (4) est équipé d'un fond (43) entouré d'une paroi saillante (41), comprenant en outre un intervalle (44) dans le fond (43) communiquant avec le tube de trop-plein (63).

7. Machine à café automatique selon l'une quelconque des revendications précédentes, **caractérisée en ce que** le logement (1) présente un espace afin de recevoir le réservoir (2).

8. Machine à café automatique selon l'une quelconque des revendications précédentes, **caractérisée en ce que** le circuit électrique (7) comprend en outre un contact électrique commandé par des moyens électroniques de la machine à café automatique permettant de maintenir le niveau d'eau dans le réservoir d'eau (2) sous le bord inférieur de l'embout (21), et donc sous le niveau de trop-plein.

9. Machine à café automatique selon l'une quelconque des revendications précédentes, **caractérisée en ce que** sur le côté opposé d'un déflecteur (15) se trouve la cuve (11) avec le flotteur (3).

10. Machine à café automatique selon l'une quelconque des revendications précédentes, **caractérisée en ce que** la cuve (11) et le logement (1) présentent un fond en commun.

11. Machine à café automatique selon l'une quelconque des revendications précédentes, **caractérisée en ce que** la cuve (11) est formée par une partie inférieure, en outre par trois parois circonférentielles (14) et une partie du déflecteur (15).

12. Machine à café automatique selon l'une quelconque des revendications précédentes, **caractérisée en ce que** le tube de trop-plein (63) est en forme de lettre « L » inversée présentant un support (61) afin de supporter le capteur de réservoir (5).
